# EUROPÄISCHE PATENTANMELDUNG

(11) **EP 1 045 357 A2**
(43) Veröffentlichungstag der Anmeldung: **18.10.2000**
(21) Anmeldenummer: 00108118.1
(22) Anmeldetag: 13.04.2000
(51) Int. Cl.: G08C 23/04

(54) **Steuerungsanordnung für einen elektrischen Verbraucher**

(30) Priorität: 14.04.1999 DE 29906606 U
(71) Anmelder: bedea BERKENHOFF & DREBES GmbH, 35614 Asslar (DE)
(72) Erfinder: Lotz, Rainer, Dr., 35614 Asslar (DE)
(74) Vertreter: Missling, Arne, Dipl.-Ing.

(57) **Zusammenfassung**

Die Erfindung betrifft eine Steuerungsanordnung für einen elektrischen Verbraucher. Die Steuerungsanordnung weist dazu eine erste Lichtquelle, einen ersten Lichtwellenleiter (2) und einen Lichtsensor auf. Dabei ist die erste Lichtquelle mit dem einen Ende des ersten Lichtwellenleiters (2) und das andere Ende des ersten Lichtwellenleiters (2) mit dem Lichtsensor verbunden, so dass der Lichtsensor von der ersten Lichtquelle beleuchtbar ist.

Die Aufgabe der Erfindung ist es, eine Steuerungsanordnung so fortzubilden, dass damit ein elektrischer Verbraucher gesteuert werden kann, wobei die Steuerungsanordnung ohne interne Verwendung von elektrischem Strom auskommt.

Dieses wird dadurch erreicht, dass der erste Lichtwellenleiter (2) zumindest eine Unterbrechungsstelle aufweist, dass in der Unterbrechungsstelle in den Strahlengang eine Blende schwenk- oder schiebbar ist, und dass das hieraus resultierende Steuersignal des Lichtsensors den elektrischen Verbraucher steuert.

## Beschreibung

Die Erfindung betrifft eine Steuerungsanordnung für einen elektrischen Verbraucher mit einer ersten Lichtquelle, einem ersten Lichtwellenleiter und einen Lichtsensor, wobei die erste Lichtquelle mit dem einen Ende des ersten Lichtwellenleiters und das andere Ende des ersten Lichtwellenleiters mit dem Lichtsensor verbunden ist, so dass der Lichtsensor von der ersten Lichtquelle beleuchtbar ist.

Eine derartige Anordnung von einer Lichtquelle, einem Lichtwellenleiter und einem Lichtsensor ist beispielsweise zur Übertragung von Nachrichtensignalen aus der Telekommunikationstechnik bekannt. Vielfach werden heute Telefongespräche oder andere Daten über Lichtwellenleiter über große Distanzen übermittelt. Sprache wird dazu zunächst in ein elektrisches Signal umgewandelt. Dieses elektrisches Signal wird wiederum in der Lichtquelle in ein optisches Signal transformiert. Das optische Signal wird durch den Lichtwellenleiter auf den Sensor geleitet, der wiederum das optische Signal in ein elektrisches Signal zurücktransformiert. Dieses elektrische Signal kann dann beispielsweise die Sprache mittels eines Lautsprechers wieder für den Menschen hörbar machen. Der Lautsprecher ist in einer solchen Anordnung ein elektrischer Verbraucher, der von dem aufgenommenen Sprachsignal gesteuert wird. Der Lichtwellenleiter, die Lichtquelle und der Lichtsensor dienen hier nur der Übermittlung des Steuerungssignals vom Mikrofon zum Lautsprecher. Ein äußerer (Steuer-) Eingriff findet weder in der Lichtquelle noch im Lichtwellenleiter oder dem Lichtsensor statt.

Außerdem sind aus dem täglichen Leben Steuerungen bekannt, mit denen elektrische Verbraucher gesteuert werden können. Das einfachste Beispiel ist ein Lichtschalter, über den ein Treppenlichtautomat betätigt wird. Mit diesem Treppenlichtautomat wird die Beleuchtung eines Treppenhauses für eine voreingestellte Zeit eingeschaltet. Der Treppenlichtautomat wird dabei von dem Steuersignal des Schalters, der zumeist als Taster ausgeführt ist, beaufschlagt. Daraufhin wird der Stromkreis des Verbrauchers, hier der Treppenhausbeleuchtung, entsprechend der Steueranweisung geschlossen, um anschließend nach Ablauf einer voreingestellten Zeit wieder geöffnet zu werden. Man findet in diesem Beispiel somit zwei Stromkreise: Einen Steuerstromkreis, der vom Lichtschalter geschaltet wird und durch den der Treppenlichtautomat gesteuert wird, und einen Verbraucherstromkreis, der vom Treppenlichtautomat geschaltet (gesteuert) wird und in dem die Lampen der Beleuchtungseinrichtung eingebaut sind.

In vielen Anwendungsfällen ist ein elektrischer Steuerstromkreis des Verbrauchers nicht wünschenswert oder gar gefährlich. Dies betrifft insbesondere alle Arten von Feuchträumen (Sauna, Schwimmbad, etc.). In Messlabors für die Untersuchung von elektromagnetischen Wellen ist es wünschenswert, wenn Quellen für elektromagnetische Felder möglichst ausgeschlossen werden. Je weniger elektrische Einrichtungen, also auch elektrische Steuereinrichtungen in dem Messlabor vorhanden sind, um so weniger wird das Messergebnis durch äußere Störungen beeinträchtigt. Elektrische Schalter bzw. Steuerstromkreise in explosionsgeschützten Räumen oder unter Wasser sind heute nur mit besonderem Aufwand möglich.

Der Erfindung liegt daher die Aufgabe zugrunde, eine Steuerungsanordnung vorzuschlagen, mit der ein elektrischer Verbraucher gesteuert werden kann, wobei die Steuerungsanordnung ohne interne Verwendung elektrischen Stromes auskommt.

Diese Aufgabe wird erfindungsgemäß dadurch gelöst, dass der erste Lichtwellenleiter zumindest eine Untersuchungsstelle aufweist, dass in der Unterbrechungsstelle in den Strahlengang eine Blende schwenk- oder schiebbar ist, und dass das hieraus resultierende Steuersignal des Lichtsensors den elektrischen Verbraucher steuert.

Die erfindungsgemäße Steuerungsanordnung ersetzt so den herkömmlichen Steuerstromkreis. Eine geeignete Installation der erfindungsgemäßen Steuerungsanordnung zur Steuerung eines elektrischen Verbrauchers aus einem Feuchtraum heraus kann folgendermaßen aussehen: Die erste Lichtquelle und der Lichtsensor sind außerhalb des Feuchtraums untergebracht. Der erste Lichtleiter wird von der ersten Lichtquelle aus in den Feuchtraum hineingeführt, indem sich die schwenk- oder schiebbare Blende befindet. Anschließend wird der erste Lichtleiter wieder aus dem Feuchtraum herausgeführt und mündet mit dem anderen Ende an dem Lichtsensor. Alle stromführenden Komponenten befinden sich somit außerhalb des Feuchtraums. Die schwenk- bzw. schiebbare Blende selbst führt keinen Strom. Sie kann daher bedenken- und gefahrlos in einem Feuchtraum, ja selbst unter Wasser installiert werden.

Gemäß der Erfindung kann der erste Lichtwellenleiter Verzweigungen aufweisen, so dass mehrere elektrische Verbraucher ansteuerbar sind. Vorteilhaft ist es dann, wenn in den Abzweigungen Blenden eingebaut sind. Es können aber auch mehrere erste Lichtwellenleiter-Blenden-Kombinationen von der ersten Lichtquelle beaufschlagt werden.

Erfindungsgemäß kann die Blende Bereiche mit unterschiedlicher Lichtdurchlässigkeit haben. Dadurch kann die Lichtmenge, die auf dem Lichtsensor auftrifft, gesteuert werden. Somit ist auch eine kontinuierliche oder abgestufte Steuerung des elektrischen Verbrauchers möglich.

Der Lichtsensor beaufschlagt mit seinem Steuersignal vorteilhaft eine elektronische Schaltung. Diese ist dann vorzugsweise mit einem Relais verbunden, welches den Stromkreis des elektrischen Verbrauchers schaltet.

Die Blende kann Teil eines herkömmlichen Installations-Schalters oder -Dimmers sein. Die Blenden ließen sich so in das bestehende, größtenteils genormte System von Schaltern, Steckdosen etc. integrieren. Es kann so auf die herkömmlichen Dosen, Schalterwippen, Rahmen etc. zurückgegriffen werden. Der Schalter unterscheidet sich dann äußerlich nicht von einem herkömmlichen Lichtschalter.

Besonders vorteilhaft ist es, wenn der Schalter eine optische Anzeige über den Schaltzustand des elektrischen Verbrauchers bzw. des Stromkreises des elektrischen Verbrauchers aufweist.

In einer besonderen Ausgestaltung der Erfindung ist der elektrische Verbraucher eine Lichtquelle. An dieser Lichtquelle kann ein zweiter Lichtwellenleiter angeschlossen sein. Das Ende dieses zweiten Lichtwellenleiters kann in eine Lichtsteckdose - wie sie aus dem Gebrauchsmuster No. 297 134 711.0 bekannt ist - münden. Das Ende des zweiten Lichtwellenleiters kann aber auch in einen Diffusor münden, durch den das in der zweiten Lichtquelle erzeugte Licht im Raum verteilt werden kann. Eine derartige Anordnung hat den Vorteil, um das eingangs erwähnte Beispiel des Feuchtraumes aufzugreifen, dass nun der zweite Lichtwellenleiter zurück in den Feuchtraum geführt werden kann, damit dann mittels diesem der Feuchtraum beleuchtet wird. Man hat also nun die Möglichkeit, vom Feuchtraum aus eine Beleuchtungseinrichtung in dem Feuchtraum einzuschalten, ohne dass dabei elektrische Leitungen, Schalter oder andere elektrische Komponenten der Beleuchtungseinrichtung in dem Feuchtraum sind.

Anhand der Zeichnung werden zwei Ausführungsbeispiele näher beschrieben. Darin zeigt
- Fig. 1: eine erfindungsgemäße Steuerungsanordnung zum Schalten eines ersten elektrischen Verbrauchers
und
- Fig. 2: eine erfindungsgemäße Steuerungsanordnung zum Schalten eines zweiten elektrischen Verbrauchers.

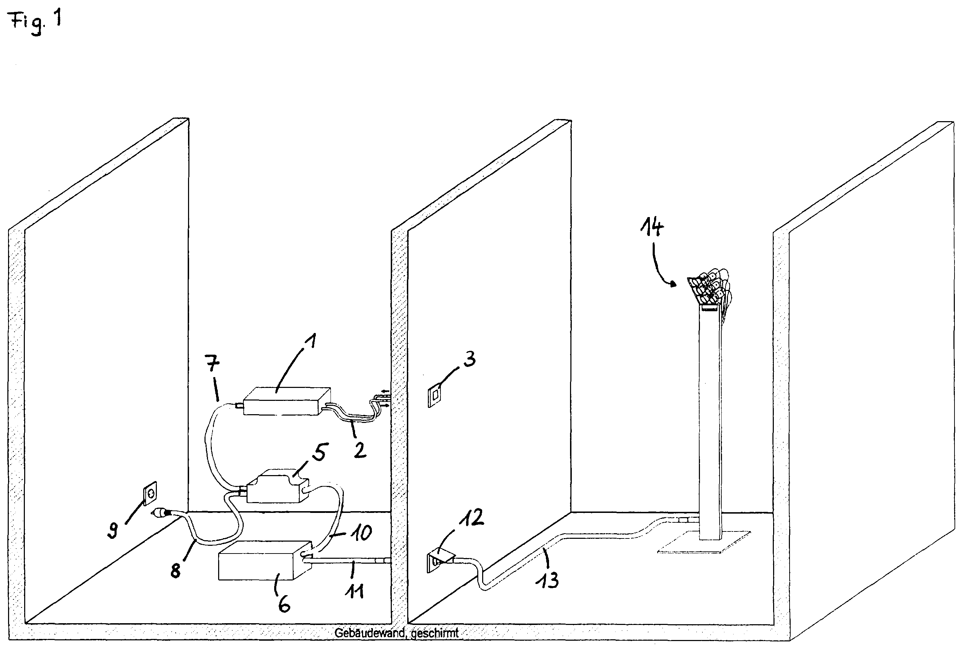

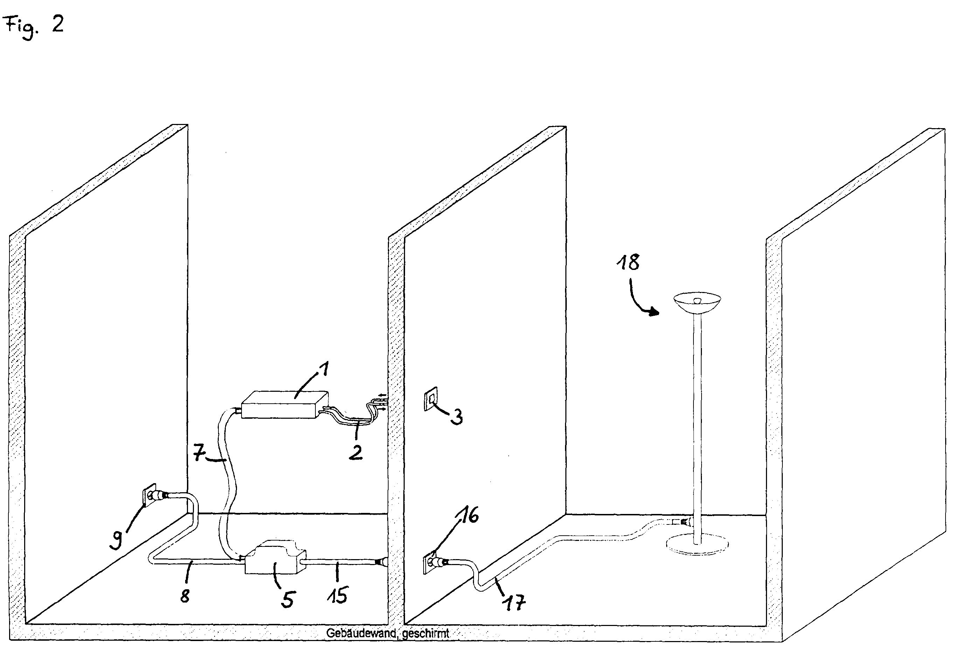

Die erfindungsgemäße Steuerungsanordnung gemäß den Figuren 1 und 2 besteht aus einer ersten Lichtquelle, die in dem Gehäuse 1 untergebracht ist, einem ersten Lichtwellenleiter 2, der Blende 3 und aus dem ebenfalls in dein Gehäuse untergebrachten Lichtsensor. An das Gehäuse 1 ist eine Steuer- und Versorgungsleitung 7 angeschlossen. Die Steuer- und Versorgungsleitung ist an die Versorgungseinheit 5 angeschlossen. Die Versorgungseinheit 5 ist einerseits selbst über das Netzkabel 8 an der Netzsteckdose 9 anschließbar, und andererseits wird von der Versorgungseinheit 5 der eigentliche elektrische Verbraucher mit der notwendigen Spannung versorgt (Verbraucheranschlussleitung 10, 15).

Die in dem Gehäuse 1 untergebrachte erste Lichtquelle ist im Normalfall dauerhaft eingeschaltet. Von hier ausgehendes Licht wird in den ersten Lichtwellenleiter 2 eingeleitet. Dieser geht durch die Wand 19 hindurch in den benachbarten Raum. Dort ist in den ersten Lichtwellenleiter 2 die Blende 3 eingebaut. Mit dieser Blende kann der in dem Lichtwellenleiter 2 geführte Lichtstrahl unterbrochen werden. Das sich an die Blende 3 anschließende Stück des Lichtwellenleiters 2 wird wieder aus dem benachbarten Raum herausgeführt und ist an dem Gehäuse 1 angeschlossen. Dort wird von dem in dem Lichtwellenleiter 2 geführten Lichtstrahl, je nach Stellung der Blende 3, der Lichtsensor beschienen. Das von dem Lichtsensor erzeugte elektrische Steuersignal gelangt dann durch die Steuer- und Versorgungsleitung 7 zu der Versorgungseinheit 5. Innerhalb der Versorgungseinheit 5 wird mit dem von dem Lichtsensor kommenden Steuersignal eine elektronische Schaltung beaufschlagt, welche wiederum ein Relais schaltet. Mittels dieses Relais wird der Stromkreis des elektrischen Verbrauchers ein- bzw. ausgeschaltet. Die Teile 1, 5 und 7 können auch in einem Gehäuse untergebracht sein.

Bei der in Figur 1 dargestellten Anordnung ist der elektrische Verbraucher 6 eine zweite Lichtquelle. Das von dieser zweiten Lichtquelle 6 ausgehende Licht wird über einen zweiten Lichtwellenleiter 11 zu einer Lichtsteckdose 12 in dem benachbarten Raum geführt. Diese Lichtsteckdose ist gemäß dem Gebrauchsmuster DE 297 134 711.0 ausgeführt. In der Lichtsteckdose ist ein dritter Lichtwellenleiter 13 eingesteckt, durch den das von der zweiten Lichtquelle ausgehende Licht zu einer mit Diffusoren ausgestatteten Leuchte 14 geleitet wird. In diesem benachbarten Raum, der auch gegenüber elektromagnetischen Wellen abgeschirmt ist, befinden sich keine elektrischen Verbraucher und auch keine elektrischen Leitungen. Dieser benachbarte Raum ist somit weitgehend feldfrei. Er eignet sich daher besonders als Messlabor für Messungen zur elektromagnetischen Verträglichkeit. Er ist aber ebenso geeignet als Schlafzimmer für elektro-hypersensitive Menschen, die Gesundheitsbeeinträchtigungen durch elektromagnetische Wellen befürchten. Weiter können somit Feuchträume beleuchtet werden, wobei selbst der Schalter für diese Leuchten in diesem Feuchtraum ist. Besonders geeignet ist diese Art der Beleuchtung für explosionsgeschützte Räume, da das Auftreten von Zündquellen vermieden wird.

Bei der Anordnung gemäß Figur 2 wird von dem Relais in der Versorgungseinheit 5 eine elektrische Leuchte 18 ein- bzw. ausgeschaltet. Diese elektrische Leuchte 18 steht in dem benachbarten Raum und ist über das Leuchtenkabel 17 an der Steckdose 16 angeschlossen, welche wiederum über die Verbraucheranschlussleitung 15 mit dem Relais der Versorgungseinheit verbunden ist. Bei dieser Anordnung gemäß der Figur 2 ist zwar nicht der gesamte benachbarte Raum strom- bzw. spannungsfrei, er kann jedoch durch Betätigen des Schalters - d.h. durch ausschalten der Leuchte 18 - strom- bzw. spannungsfrei geschaltet werden. Da auch dieser Raum gegen äußere elektromagnetische Wellen abgeschirmt ist, ist dann dieser benachbarte Raum ebenfalls weitgehend feldfrei. Da der Schalter 3 (Blende) keinen Strom oder Spannung führt, kann dieser bedenkenlos in Feuchträumen, unter Wasser oder auch in explosionsgeschützen Räumen installiert sein. Für die Leuchte 18 hingegen sind die üblichen Vorschriften für Feuchträume usw. zu beachten.

### Bezugszeichenliste:

- 1: - Gehäuse für Lichtquelle/Lichtsensor
- 2: - erster Lichtwellenleiter
- 3: - Schalter
- 5: - Versorgungseinheit
- 6: - zweite Lichtquelle
- 7: - Steuer- und Versorgungsleitung
- 8: - Netzkabel
- 9: - Netzsteckdose
- 10: - Verbraucheranschlussleitung
- 11: - zweiter Lichtwellenleiter
- 12: - Lichtsteckdose
- 13: - dritter Lichtwellenleiter
- 14: - Diffusor (Leuchte)
- 15: - Verbraucheranschlussleitung
- 16: - Anschlusssteckdose
- 17: - elektrisches Leuchtenkabel
- 18: - elektrische Leuchte

## Patentansprüche

1. Steuerungsanordnung für einen elektrischen Verbraucher mit einer ersten Lichtquelle (1), einem ersten Lichtwellenleiter (2) und einem Lichtsensor (1), wobei die erste Lichtquelle (1) mit dem einen Ende des ersten Lichtwellenleiters (2) und das andere Ende des ersten Lichtwellenleiters (2) mit dem Lichtsensor (1) verbunden ist, so dass der Lichtsensor (1) von der ersten Lichtquelle (1) beleuchtbar ist,
dadurch gekennzeichnet, dass
der erste Lichtwellenleiter (2) zumindest eine Unterbrechungsstelle aufweist, dass in der Unterbrechungsstelle in den Strahlengang eine Blende (3) schwenk- oder schiebbar ist, und dass das hieraus resultierende Steuersignal des Lichtsensors (1) den elektrischen Verbraucher (6, 18) steuert.

2. Steuerungsanordnung nach Anspruch 1, dadurch gekennzeichnet, dass der erste Lichtwellenleiter (2) Verzweigungen aufweist.

3. Steueranordnung nach Anspruch 1, dadurch gekennzeichnet, dass die erste Lichtquelle (1) mehrere erste Lichtwellenleiter (2) und dazugehörige Blenden beautschlagt.

4. Steuerungsanordnung nach einem der Ansprüche 1 bis 3, dadurch gekennzeichnet, dass in den Abzweigen weitere Blenden eingebaut sind.

5. Steuerungsanordnung nach einem der Ansprüche 1 bis 4, dadurch gekennzeichnet, dass die Blende (3) Bereiche mit unterschiedlicher Lichtdurchlässigkeit hat.

6. Steuerungsanordnung nach einen der Ansprüche 1 bis 5, dadurch gekennzeichnet, dass der Lichtsensor (1) mit dem Steuersignal eine elektronische Schaltung beaufschlagt, mit der vorzugsweise über ein Relais ein Stromkreis des elektrischen Verbrauchers (6, 18) steuerbar ist.

7. Steuerungsanordnung nach einem der Ansprüche 1 bis 6, dadurch gekennzeichnet, dass die Blende (3) Teil eines herkömmlichen Installations-Schalters oder -Dimmers ist.

8. Steuerungsanordnung nach Anspruch 7, dadurch gekennzeichnet, dass der Schalter eine optische Anzeige für den Schaltzustand aufweist.

9. Beleuchtungseinrichtung mit einer Steuerungsanordnung nach einem der Ansprüche 1 bis 8, dadurch gekennzeichnet, dass der elektrische Verbraucher eine Lichtquelle (6, 18) ist.

10. Beleuchtungseinrichtung nach Anspruch 9, dadurch gekennzeichnet, dass an der Lichtquelle (6) ein zweiter Lichtwellenleiter (11) angeschlossen ist.

11. Beleuchtungseinrichtung nach Anspruch 10, dadurch gekennzeichnet, dass an das andere Ende des zweiten Lichtwellenleiters (11) eine Lichtsteckdose (12) angeschlossen ist.

12. Beleuchtungseinrichtung nach Anspruch 11, dadurch gekennzeichnet, dass der zweite Lichtwellenleiter in einen Diffusor (14) mündet.
